# EUROPEAN PATENT APPLICATION

(11) **EP 0 533 453 A1**
(43) Date of publication of application: **24.03.1993**
(21) Application number: 92308432.1
(22) Date of filing: 16.09.1992
(51) Int. Cl.: B65G 67/04

(54) **Methods and appartus for batch loading of articles**

(30) Priority: 19.09.1991 GB 9119986
(71) Applicant: KENSAL LIMITED, Luton, Bedfordshire LU2 9NR (GB)
(72) Inventor: Southwood, Anthony John, Harpenden, Hertfordshire AL5 2NQ (GB)
(74) Representative: W.P. THOMPSON & CO.

(57) **Abstract**

Articles, such as bottles (18), are loaded onto a trolley (10) having a plurality of shelves (12a, 12b, 12c) at different levels. A conveyor (24) orders and batches the bottles. They are then pushed sideways to a stacking plate (34) which is vertically displaceable. The batches of articles are pushed off the plate (34) into an accumulation zone in which the batches are held on sliding load plates (38a, 38b, 38c). The load plates are then moved into the trolley (10) and the articles are swept onto the shelves without varying the position of the trolley. Preferably, the batches of articles are moved simultaneously onto the respective shelves to minimise the cycle time required for the loading process.

## Description

This invention relates generally to methods of and apparatus for the batch loading of articles, and is particularly concerned with machines for loading trolleys with cartons or bottles. The trolleys which are to be loaded are for example the multi-shelf trolleys such as are used for the storage and transportation of bottles and cartons in large stores and supermarkets where it is required that a substantial number of such articles can be transported directly from a vehicle to the supermarket shelves for unloading and display. Conventionally, such trolleys are wheeled and have wire framework sides to retain the articles on the trolley shelves.

Conventionally, such trolleys are loaded from a conveyor, on which the articles to be packed are batched, by raising or lowering the trolley as a whole so that the individual trolley shelves are successively positioned at the level of the conveyor output and so that batches of the articles can be pushed on to the trolley shelves in sequence. In other words, one trolley shelf is loaded, the trolley is then raised or lowered, the next shelf is loaded, the trolley is raised or lowered again, etc. Such a procedure gives rise to problems in terms of the cycle time for the conveyor installation. It makes it very difficult to achieve high speed loading because, once all the trolley shelves have been loaded, there is only a relatively short time for the loaded trolley to be removed and for a new trolley to be positioned to receive its articles.

It is an object of the present invention to provide a method of and apparatus for loading mobile units such as trolleys in which the cycle of events is modified to improve the overall cycle efficiency.

It is a further object of the invention to provide a method of and apparatus for loading mobile units such as trolleys in which it is unnecessary for the trolley to be raised or lowered during the loading process.

In accordance with one aspect of the invention there is provided a method of loading batches of articles onto a plurality of different height shelves of a mobile unit, which comprises accumulating the batched articles in numbers appropriate for the individual shelves at respective different levels corresponding to the shelf levels, and loading the shelves from the accumulation zone without varying the height of the mobile unit.

Also in accordance with the invention there is provided apparatus for loading articles onto a mobile unit having a plurality of shelves at different levels, comprising conveyor means for ordering and batching individual articles to be loaded, stacking means arranged to move the batches of articles to an accumulation zone in which the batched articles are held at respective levels corresponding to the shelf levels, and means for displacing the batched articles from the accumulation zone onto the shelves without varying the height of the shelves.

Preferably, the batched articles which have accumulated in the accumulation zone are displaced simultaneously onto the shelves. Such simultaneous loading of all the shelves minimises the cycle time which is required for the actual loading process and maximises the time available at the loading station for removing loaded mobile units and replacing them by empty mobile units.

In order that the invention may be more fully understood, one presently preferred embodiment of apparatus in accordance with the invention will now be described by way of example and with reference to the accompanying drawings, in which:

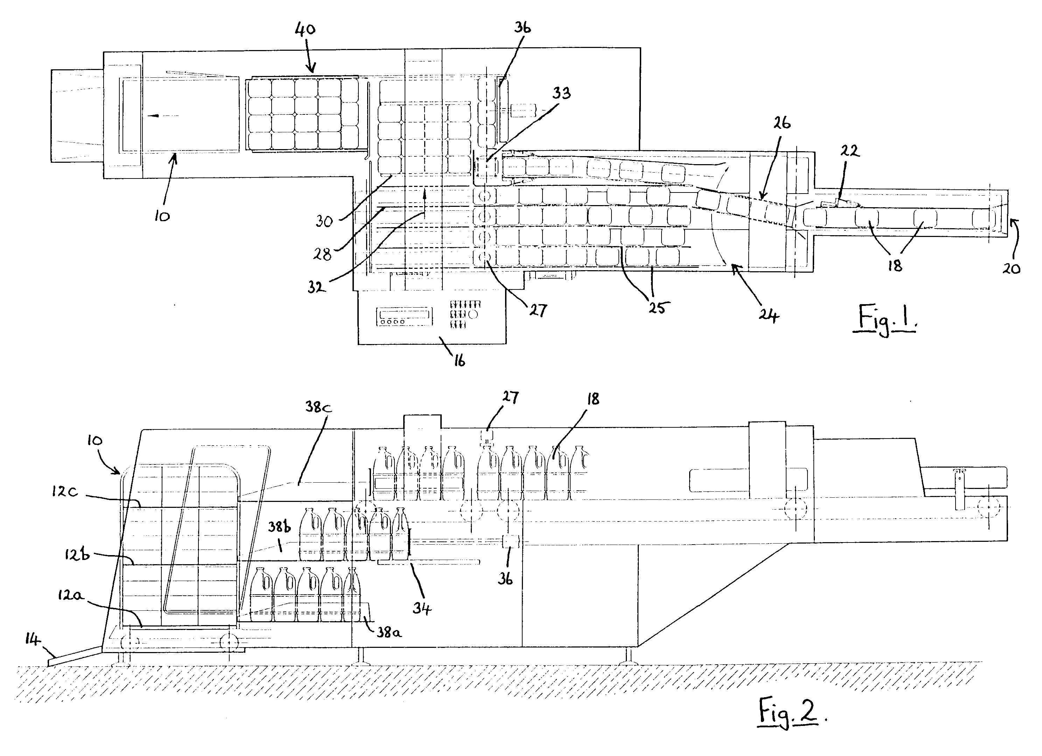

Fig. 1 is a plan view of the apparatus; and
Fig. 2 is a side view of the apparatus of Fig.1.

In the drawings only those parts of the conveyor installation which are essential to an understanding of the present invention are shown. Other parts of the apparatus are shown only schematically, for clarity.

The method and apparatus of the present invention can be used for the loading of articles of any description, although the apparatus is particularly appropriate for the loading of cartons, such as milk cartons, and bottles, such as PET bottles. The conveyor installation is arranged to load the articles onto a wheeled trolley, indicated generally at 10, which in this embodiment has three shelves 12a, 12b and 12c. The trolley, as is customary, has wire framework sides to retain the loaded articles in place during transportation. The trolley 10 is pushed up a ramp 14 into a receiving position, as illustrated, adjacent to the output end of a conveyor installation.

The conveyor installation is operated from a control console 16. Articles 18 to be batched and loaded on the trolley 10 enter the conveyor installation as a single line of spaced articles at an input indicated at 20. The articles 18 are here shown as bottles, but the invention is not limited to such articles. The bottles 18 pass a bottle stop 22 and then pass to a slat conveyor, indicated generally at 24. The bottles 18 are directed onto the slat conveyor by a lane divider 26 which directs the bottles in turn into one of five lanes which are separated by lane guides 25. At the output end of each lane is a top bottle stop 27. At the output end of the slat conveyor 24 is the first part of a batching zone which is fitted with drop-down lane guides 28. Also provided in this batching zone is a cross pusher 30. When a number of bottles 18 sufficient to constitute a batch is present in this part of the batching zone, the lane guides 28 are lowered and the cross pusher 30 pushes the batch of bottles transversely, as indicated by arrow 32. As can be seen from the drawing, the batch consists of sixteen bottles. Three additional bottles are then added to each batch, these latter bottles coming from a separate lane of the slat conveyor and being turned through 90° by a rotator 33 as compared with the orientation of the main part of the batch.

The batch of bottles, when fully displaced sideways relative to the slat conveyor 24, is positioned on a down-stacker plate 34 which lowers the batch of bottles from the level of the conveyor belt down to approximately the level of the bottom shelf 12a of the trolley. A layer pusher 36 is then actuated to cause the batch of bottles to be displaced horizontally from the down-stacker plate onto a sliding loading plate 38a. Similarly, a second batch of bottles 18 is next lowered in equivalent manner by the down-stacker plate 34 to the level of the middle shelf 12b of the trolley and these bottles are off-loaded by the pusher 36 onto an intermediate level sliding loading plate 38b. Finally, a third batch of bottles is pushed onto an upper sliding loading plate 38c which is approximately at the level of the top shelf 12c of the trolley.

At this point in time the three batches of bottles 18 are positioned one above the other on their respective loading plates 38a, 38b, 38c in an accumulation zone or intermediate transfer zone which is indicated generally at 40. The sliding loading plates are then moved forward into the trolley and the three batches of bottles are then swept simultaneously from their respective loading plates onto the trolley shelves 12a, 12b and 12c. If desired, the trolley shelves can be loaded sequentially with the batches of bottles, but in any event there is no requirement to move the position of the trolley 10 for that to take place. Preferably however the trolley shelves are loaded simultaneously in order to minimise the actual loading time within the cycle.

The particular benefit of this arrangement is that a single trolley can be pushed into the reception area, and because the bottles 18 are accumulating in the machine prior to the actual loading, this gives maximum efficiency within the cycle time. For example, with an installation where bottles are being fed into the conveyor at input 20 at a rate of 180 bottles per minute, three trolleys per minute will be required to be positioned at the receiving area for batches as illustrated in the drawing. The arrangement also maximises the time available for removal of a loaded trolley and its replacement by an empty trolley within the cycle.

Although in the embodiment described above the trolley is provided with three shelves, the invention is applicable to the loading of trolleys or equivalent transportation devices having any number of shelves at different levels. It is mentioned above that although it is preferable to sweep all the batches from their loading plates onto the trolley shelves simultaneously, one could alternatively load each trolley shelf sequentially. Such sequential loading could be effected with overlap between the individual batches in order to reduce the time required for the actual loading process.

## Claims

1. A method of loading batches of articles (18) onto a plurality of different height shelves (12a, 12b, 12c) of a mobile unit (10), which comprises accumulating the batched articles in numbers appropriate for the individual shelves at respective different levels corresponding to the shelf levels, and loading the shelves from the accumulation zone (40) without varying the height of the mobile unit (10).

2. A method as claimed in claim 1, characterised by displacing all the batched articles which have accumulated in the accumulation zone (40) simultaneously onto the shelves of the mobile unit (10).

3. A method as claimed in claim 1 or 2, characterised by ordering the articles in batches at a first, input level, raising or lowering the batches of articles to respective different levels corresponding to the shelf levels, and pushing the batched articles from their raised or lowered positions into the accumulation zone (40).

4. A method as claimed in claim 3, characterised in that the batched articles are raised or lowered on a vertically movable plate (34) from which they are pushed into the accumulation zone (40) when each batch reaches its assigned level.

5. Apparatus for loading articles (18) onto a mobile unit (10) having a plurality of shelves (12a, 12b, 12c) at different levels, comprising conveyor means (24) for ordering and batching individual articles to be loaded, stacking means (34, 36) arranged to move the batches of articles to an accumulation zone (40) in which the batched articles are held at respective levels corresponding to the shelf levels, and means (38a, 38b, 38c) for displacing the batched articles from the accumulation zone (40) onto the shelves (12a, 12b, 12c) without varying the height of the shelves.

6. Apparatus as claimed in claim 5, characterised in that the displacing means are arranged to move all the batched articles in the accumulation zone simultaneously onto the shelves.

7. Apparatus as claimed in claim 5 or 6, characterised in that the displacing means comprise sliding loading plates (38a, 38b, 38c), one for each shelf (12a, 12b, 12c).

8. Apparatus as claimed in claim 5, 6 or 7, characterised in that the stacking means comprises a vertically movable plate (34) for batched articles, and means (36) to push the articles from the plate into the accumulation zone (40).

9. Apparatus as claimed in any of claims 5 to 8, characterised in that the conveyor means (24) has a single line input of articles which are directed into a plurality of lanes, and batches of articles are pushed from the lanes transversely to a pusher (36) which displaces them to the stacking means.

10. Apparatus as claimed in any of claims 5 to 9, characterised in that the conveyor means (24) is adapted to order the articles so that in each batch some of the articles are orientated at 90° to the rest of the articles.
